# EUROPEAN PATENT APPLICATION

(11) **EP 2 287 799 A1**
(43) Date of publication of application: **23.02.2011**
(21) Application number: 09757078.2
(22) Date of filing: 02.06.2009
(51) Int. Cl.: G06Q 30/00

(54) **SYSTEM AND METHOD FOR REPORTING ADVERTISEMENT MEASUREMENT**

(30) Priority: 05.06.2008 CN 200810067706
(71) Applicant: Huawei Technologies Co., Ltd., Longgang District, Shenzhen Guangdong 518129 (CN)
(72) Inventor: ZHAN, Jinjing, Shenzhen Guangdong 518129 (CN); SHAO, Gang, Shenzhen Guangdong 518129 (CN); TAN, Yinyan, Shenzhen Guangdong 518129 (CN); FU, Pei, Shenzhen Guangdong 518129 (CN)
(74) Representative: Thun, Clemens
(86) International application number: PCT/CN2009/072092
(87) International publication number: WO 2009/146644

(57) **Abstract**

The embodiments of the present invention disclose an advertisement measuring and reporting system and method. The system includes an advertisement client adapted to communicate with an advertisement server about advertisement; the advertisement client is adapted to obtain user interactions with advertisement, process the user interactions with advertisement according to an advertisement metrics policy, and report the processed user interactions with advertisement to the advertisement server; and the advertisement server is adapted to collect the processed user interactions with advertisement. Meanwhile, the embodiment of the present invention also provides a terminal, an advertisement client, an advertisement server, an advertisement measuring and reporting method and an advertisement interaction record collection method. The technical scheme of the embodiment of the present invention is employed to effectively improve the utilization of a network, facilitate advertisement launch and counting, and benefit the development of the advertising service.

## Description

This application claims priority to Chinese patent application No. 200810067706.4, filed with the China Patent Office on June 5, 2008 and entitled "System and Method for Advertisement Measuring and Reporting", the disclosure of which is incorporated herein by reference in its entirety.

### FIELD OF THE TECHNOLOGY

The present invention relates to the communication technical field, in particular to an advertisement measuring and reporting system and method.

### BACKGROUND

At present, Internet advertising and mobile advertising develop quickly along with data services, but advertisers require to measure the advertisement launch effects, and the measurement of the advertisement launch effect is a hot spot in the research and development of the Internet advertising and the mobile advertising. Conventional measurement of the advertisement launch effect generally includes collecting user advertisement interactions through an advertisement server from a mobile terminal in a polling manner so as to count user advertisement interaction information. During the realization of the present invention, inventors find that the conventional measurement of the advertisement launch effect may not effectively judge which user advertisement interactions satisfy the measurement of the advertisement launch effect, which wastes a large quantity of network resources, lowers the network utilization rate, is inconvenient for the advertisement launch and counting and unfavorable for development of the advertising service.

### SUMMARY

In view of this, it is necessary to provide a convenient advertisement measuring system so as to improve the network utilization rate. Meanwhile, a terminal, an advertisement client, an advertisement server, an advertisement measuring and reporting method and an advertisement interaction record collection method are provided.

An advertisement measuring and reporting system includes: an advertisement client adapted to communicate with an advertisement server about advertisement. The advertisement client is adapted to obtain user interactions with advertisement, process the user interactions with advertisement according to an advertisement metrics policy, and report the processed user interactions with advertisement to the advertisement server, and the advertisement server is adapted to collect the processed user interactions with advertisement.

A terminal includes an advertisement client adapted to communicate with a service client about advertisement. The advertisement client is adapted to obtain user interactions with advertisement, process the user interactions with advertisement according to an advertisement metrics policy, and report the processed user interactions with advertisement, and the service client is adapted to present an advertisement for a user and transmit the user interactions with advertisement to the advertisement client.

An advertisement client includes: an interaction record unit, adapted to obtain user interactions with advertisement; a processing unit, adapted to process the user interactions with advertisement according to an advertisement metrics policy; and a reporting unit, adapted to report the processed user interactions with advertisement.

An advertisement server includes: a metrics policy management unit, adapted to send an advertisement metrics policy to an advertisement client; and a metrics collection unit, adapted to collect user interactions with advertisement which is processed by the advertisement client according to the advertisement metrics policy.

An advertisement measuring and reporting method includes:
obtaining user interactions with advertisement;
processing the user interactions with advertisement according to an advertisement metrics policy; and
reporting the processed user interactions with advertisement.

An advertisement interaction record collection method includes:
requesting advertisement interaction records from an advertisement client;
   and
collecting user interactions with advertisement which are processed by the advertisement client according to an advertisement metrics policy.

Compared with the conventional advertisement launch effect metric techniques, the embodiment of the present invention counts and reports user interactions with advertisement by processing the user interactions with advertisement by a terminal according to the advertisement metrics policy and reporting the processed user interactions with advertisement, which benefits to count user advertisement interactions, facilitate the measurement of the advertisement launch effect, save network resources, effectively improve the effective utilization of the network, is convenient for launching and counting advertisement and is favorable for development of the advertising service.

### BRIEF DESCRIPTION OF THE DRAWINGS

Fig. 1 is a structural diagram of an advertisement measuring and reporting system of an embodiment of the present invention.

Fig. 2 is a detailed structural diagram of an advertisement measuring and reporting system of an embodiment of the present invention.

Fig. 3 is a structural diagram of advertisement metrics policy constitution of an embodiment of the present invention.

Fig. 4 is a flow diagram of an advertisement measuring and reporting method adapted in the advertisement client of an embodiment of the present invention.

Fig. 5 is a flow diagram of an advertisement measuring and reporting method of one embodiment of the present invention.

Fig. 6 is a flow diagram of an advertisement measuring and reporting method of another embodiment of the present invention.

Fig. 7 is a flow diagram of an advertisement measuring and reporting method of another embodiment of the present invention.

Fig. 8 is a flow diagram of an advertisement measuring and reporting method of another embodiment of the present invention.

### DETAILED DESCRIPTION

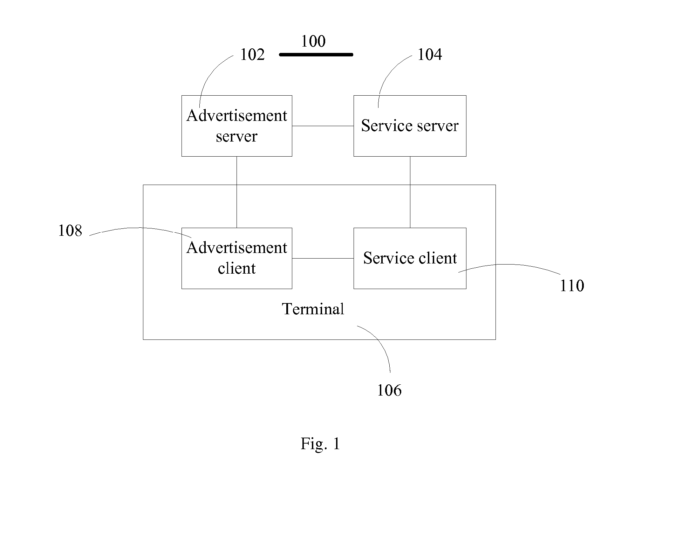

Referring to Fig. 1, an advertisement measuring and reporting system of an embodiment of the present invention includes an advertisement server 102 and a terminal 106. In the system, the terminal 106 includes an advertisement client 108. The advertisement client 108 may be adapted to communicate with the advertisement server 102 about advertisement; the advertisement client 108 is adapted to obtain user interactions with advertisement, process the user interactions with advertisement according to an advertisement metrics policy, and report the processed advertisement interaction records to the advertisement server 102 or a third-party network entity such as another advertisement client, a data server, or the like; and the advertisement server 102 is adapted to collect the processed user interactions with advertisement. The terminal 106 of the embodiment of the present invention may be terminal equipment with a communication function such as a Personal Computer (PC), a Notebook Computer (NB), a Personal Digital Assistant (PDA), a Handset (HS), an Intelligent Optical Disk Drive (IODD) or the like. In the embodiment, the advertisement measuring and reporting system is illustrated by taking the HS as an example.

Further, the advertisement measuring and reporting system may also include a service server 104, and the terminal 106 may also include a service client 110. The service client 110 may be adapted to communicate with the service server 104 about advertisement; the service server 104 is adapted to obtain advertisement information from the advertisement server 102 and send the advertisement information to the service client 110; and the service client 110 is adapted to present an advertisement for a user and transmit user interactions with advertisement to the advertisement client 108. The service client 110 receives service data and advertisement information from the service server 104 or advertisement information from the advertisement client 108, displays the advertisement to the user when the relevant condition is satisfied, records the user interaction on the advertisement, and transmits the user interactions with advertisement to the advertisement client 108. The user interactions with advertisement information may mark one user interaction on the advertisement, may include advertisement identification, interaction type, starting time, ending time, etc.; the starting time and the ending time have different meanings for the advertisement of different types, for example, the starting time and the ending time correspond to the starting time and the ending time of video play for a video advertisement, and correspond to the starting time and the ending time of a call for a click-to-call advertisement. Meanwhile, if an advertisement sent by the service server 104 to the service client 110 includes a metrics policy, the service client 110 needs to transmit the metrics policy to the advertisement client 108. In the system, one advertisement client 108 may correspond to one or more service clients 110.

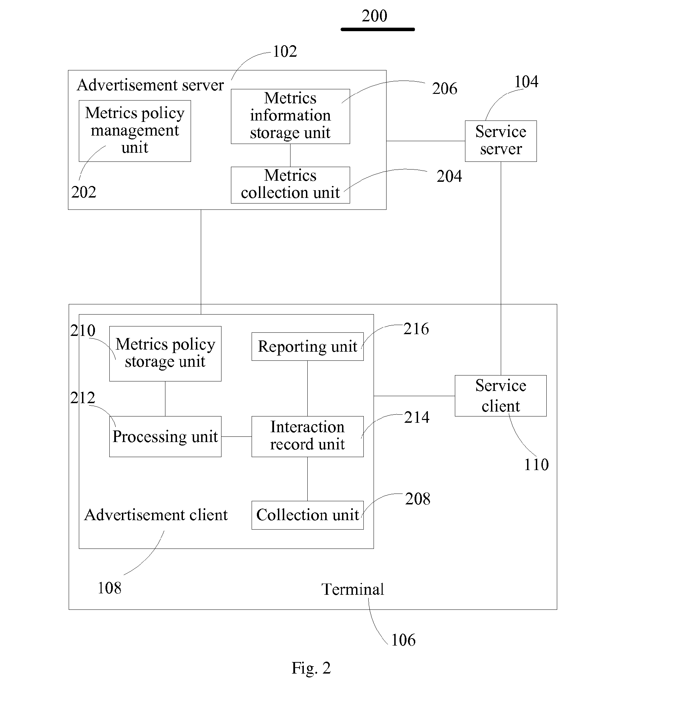

Referring to Fig. 2, the advertisement server 102 includes a metrics policy management unit 202 and a metrics collection unit 204.

The metrics policy management unit 202 is adapted to provide an advertisement metrics policy, and the advertisement metrics policy includes a judgment condition for judging whether a user advertisement interaction is valid. The different types of advertisements may have different metric policies, and the metric policies may be set according to intended advertising effects; and one advertisement may also have a plurality of metric policies. For example, for a click-to-browse advertisement, the maximum number of clicks in a scheduled time of the user may be set. For a click-to-call advertisement, a metrics policy includes a certain duration for which a call must last, the maximum number of calls, etc., but does not include the number of click-to-browses.

The types of the metrics policies include: the number of user interactions (such as click-to-browse, click-to-call, click-to-download, etc.) on a certain advertisement in a unit time, the number of user interactions on a certain advertisement in a random time, the number of user interactions on all advertisement in a unit time, and so on; and for a click-to-call advertisement, also include setting call duration, etc. The system may set a default metrics policy which is used when no effective metrics policy is available for a certain advertisement.

The metrics collection unit 204 is adapted to collect the user interactions with advertisement which are processed by the advertisement client 108 according to an advertisement metrics policy. The metrics collection may be achieved in a Push/Pull manner. For the Pull manner, a metric request of the advertisement server 102 includes categories of metrics information (valid, invalid, false, all, unprocessed, etc.), and the advertisement client 108 returns the metrics information of the corresponding category to the advertisement server 102 according to the processed measuring result. For the Push manner, the advertisement client 108 triggers the reporting of the metrics information and sends the preprocessed metrics information to the advertisement server 102 according to the reporting rules. A reporting unit 216 may initiatively report when the relevant condition is satisfied, and may also report when the advertisement server 102 sends a request to the advertisement client 108 to obtain the measuring result. In the embodiment, the reported contents include valid user advertisement interaction record information, invalid or false user advertisement interaction record information or all the user advertisement interaction record information, etc.; the advertisement server 102 may set which type of the user interactions with advertisement are reported, for example, the advertisement server 102 requires the advertisement client 108 to report only the valid user advertisement interaction record information while sending configuration information to the advertisement client 108, or the advertisement server 102 requires the advertisement client 108 to report all the user advertisement interaction record information while requesting to obtain the user advertisement interaction record information to the advertisement client 108, etc.

Further, the advertisement server 102 may also include a metrics information storage unit 206 adapted to store collected and processed user interactions with advertisement.

The advertisement client 108 includes an interaction record unit 214, a processing unit 212 and the reporting unit 216. The interaction record unit 214 is adapted to store the user interactions with advertisement. The processing unit 212 is adapted to process the user interactions with advertisement according to the advertisement metrics policy and judge whether the user interactions with advertisement is an invalid record, a false record or a valid record. In the embodiment, the processing unit 212 obtains undetermined user interactions with advertisement information from the interaction record unit 214, obtains the advertisement metrics policy, analyzes whether each record satisfies the rule in the policy, and returns a judgment result to the interaction record unit 214 so as to report the records to the advertisement server 102 together. The reporting unit 216 is adapted to report one or more processed user interactions with advertisement in the interaction record unit 214 to the advertisement server, and in order to report the metrics information of different categories (valid, invalid or false, all, unprocessed, etc.), the reporting unit may obtain only the user interactions with advertisement of the corresponding category from the interaction record unit 214; the reporting unit may also obtain all of the user interactions with advertisement, then discard the invalid or false user interactions with advertisement and report only the valid records, or merge the invalid or false user interactions with advertisement into the reported metrics information. Meanwhile, validity identifications of the user interactions with advertisement may be sent to the advertisement server together. A plurality of user interactions with advertisement may be integrated into one integrated report, that is, a plurality of user interactions with advertisement are reported together. In the embodiment, the interaction record unit 214 obtains and stores the user advertisement interaction record information from the service client, and provides the information to the processing unit 212 to analyze and judge whether each of the records is valid, and each of the records may be marked according to the judgment result. Meanwhile, an analyzed and judged record is differentiated from an undetermined record. For example, whether a certain record is valid may be identified according to a "valid/invalid" field in the table below, and a value 'null' of the field of the record means that the record is not subject to the validity judgment.

| Serial Number | Advertisement Identification | Interaction Type | Starting Time | Ending Time | Validity or Invalidity |
|---|---|---|---|---|---|
| 011 | 0001 | Video view | 05.04, 10:00:05 | 05.04,10:01:15 | Validity |
| 012 | 0001 | Video view | 05.04, 10:05:01 | 05.04, 10:05:55 | Invalidity |
| 013 | 0005 | Call | 05.04, 10:30:01 | 05.04, 10:31:01 | Null |

In another embodiment of the present invention, the advertisement client 108 may also include a collection unit 208 adapted to collect the user interactions with advertisement and stores the user interactions with advertisement in the interaction record unit 214. The collection unit 208 collects the user interactions with advertisement which may be reported by the service client 110, and may initiatively request to obtain the user interactions with advertisement from the service client 110.

In a further embodiment of the present invention, the advertisement client 108 may further include a metrics policy storage unit 210 adapted to store the advertisement metrics policy which may be separately sent to the advertisement client 108 by the metrics policy management unit 202 of the advertisement server 102 or carried in the advertisement when the advertisement is sent. Alternatively, the advertisement client 108 may initiatively request to obtain the advertisement metrics policy from the advertisement server 102. Alternatively, the advertisement metrics policy is set by the advertisement client 108 or the terminal 106 itself, and does not need to be obtained from the advertisement server 102. In the present embodiment, the advertisement metrics policy may be configured by an OMA DM (Open Mobile Alliance Device Management) protocol.

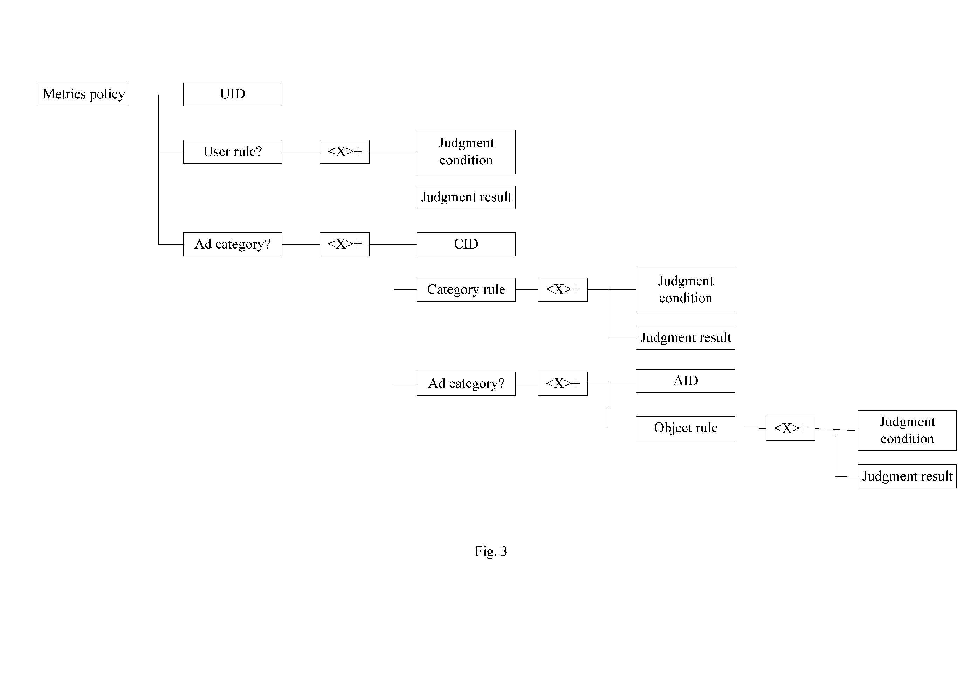

Referring to Fig. 3, an advertisement metrics policy may be expressed in the form of an MO (Managed Object).The Metrics policy includes a User Identification (UID), a User Rule and an advertisement Category. The User Rule also includes a judgment Condition and a judgment Result. The advertisement Category also includes a Category Identification (CID), a Category Rule and an advertisement Object. The advertisement Object also includes an advertisement Identification (AID) and an Object Rule. The Category Rule and the Object Rule respectively include the judgment Condition and the judgment Result.

The Condition includes a browse frequency, the total number of browses, a browse duration, an interaction frequency, the total number of interactions, an interaction duration, click, download, calls, etc.

The Result include the information that a single user advertisement interaction record is invalid or false, a plurality of the user interactions with advertisement are invalid once, and all of the user interactions with advertisement are invalid or false, etc.

In another embodiment of the present invention, the advertisement server 102 sends the configuration information to the advertisement client 108, and the advertisement client 108 reads the advertisement metrics policy, processes the user interactions with advertisement and outputs a marking result. An execution process of hierarchical data includes: firstly, marking the invalid or false metrics information according to a user-level metrics policy; then further judging through a Category Rule Condition and marking the invalid or false metrics information; and finally, marking the invalid or false information through an Object Rule Condition. A union set of the invalid or false metrics information of the three levels is the finally judged invalid or false metrics information, and the other information is the valid information. The MO may be simplified as a metrics policy which is set for a user only, or simplified as a metrics policy which is set for a specific advertisement only.

In a further embodiment of the present invention, the terminal 106 is not divided into the advertisement client 108 and the service client 110, but integrates the functions of the two. For example, the interaction record unit 214, the processing unit 212 and the reporting unit 216 are incorporated in the service client.

The embodiment of the present invention adopts the terminal to process the user interactions with advertisement according to an advertisement metrics policy and report the processed user interactions with advertisement, and is with the purpose of counting and reporting the user interactions with advertisement, which benefits to counting the user interactions with advertisement, facilitates the measurement of the advertisement launch effect, saves the network resources, effectively improves the effective utilization of the network, is convenient for advertisement launch and counting and is favorable for development of the advertising service. The metrics policy storage unit stores the advertisement metrics policy so that the advertisement metrics policy may be stored on the advertisement client without obtaining the advertisement metrics policy from the advertisement server. Different judgment conditions are set so that the measurement of the advertisement becomes more accurate, which satisfies the requirements for advertisement counting, facilitates effective counting of the advertising service, and facilitates feedback of the advertisement effects.

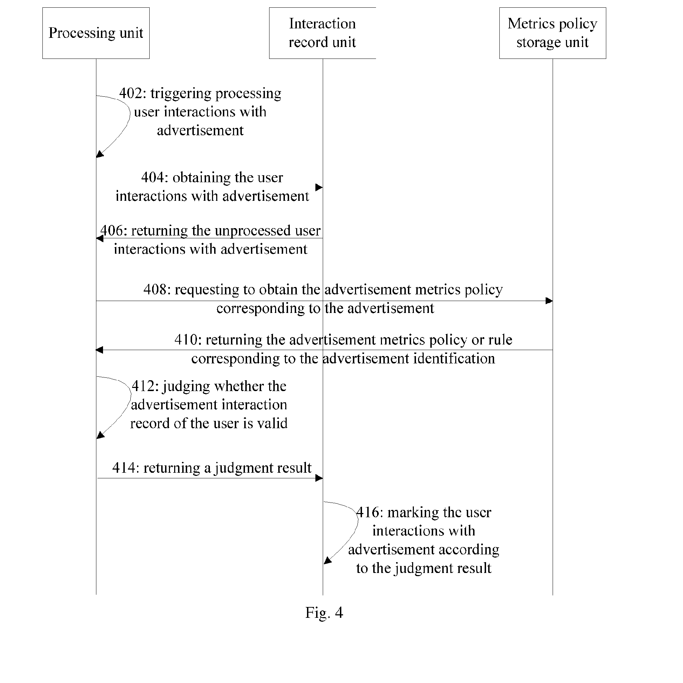

Referring Fig. 4, an advertisement measuring and reporting process in an advertisement client of one embodiment of the present invention includes the following steps:

Step 402: Processing user interactions with advertisement is triggered. In this step, the triggering conditions may be diversiform, including real-time trigger, timed trigger set by the system or trigger from other units, etc. For example, the trigger is performed when the reporting unit is ready to report the latest and valid user interactions with advertisement to the advertisement server.

Step 404: The user interactions with advertisement are obtained. In the present embodiment, the following is taken as an example: the processing unit obtains the user interactions with advertisement from the interaction record unit. A request may specify the interaction records about a certain advertisement, the advertisement interaction records in a certain period or all the unprocessed advertisement interaction records, etc.

Step 406: The interaction record unit returns the unprocessed user interactions with advertisement to the processing unit.

Step 408: The processing unit requests to obtain the advertisement metrics policy corresponding to the advertisement from the metrics policy storage unit.

Step 410: The metrics policy storage unit returns the advertisement metrics policy or rule corresponding to the advertisement identification to the processing unit.

Step 412: The processing unit analyzes and judges whether each of the advertisement interaction records of the user is valid according to the advertisement metrics policy. Other records before the record is obtained may be referred to during the judgment process according to the requirement of the metrics policy. For example, if the metrics policy specifies that the user may click the advertisement A for 5 times at most in 1h, the processing unit counts the user interaction records together with other user interaction records in the record on the advertisement A in 1h before the user interaction time while analyzing a record about the user interaction on the advertisement A. If the statistical result receives 5 times, the record is invalid or false; otherwise, the record is valid.

Step 414: The processing unit returns an analysis and judgment result to the interaction record unit.

Step 416: The interaction record unit marks the user interactions with advertisement according to the judgment result. For example, the advertisement interaction records are marked valid or invalid.

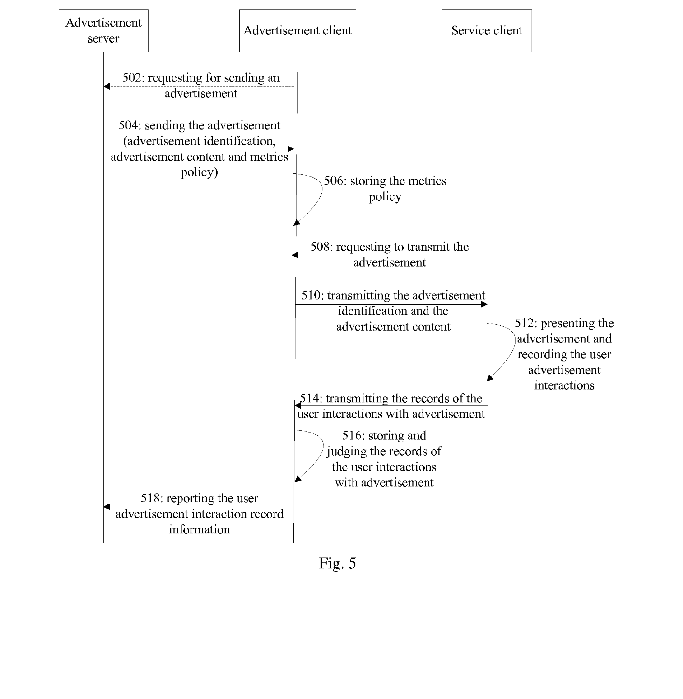

Referring to Fig. 5, Fig. 5 is a flow diagram of an advertisement measuring and reporting method of one embodiment of the present invention, and relates to an interaction flow of an advertisement server, an advertisement client and a service client, and the method includes:

Step 502: The advertisement client sends a message adapted to request for sending an advertisement to the advertisement server. In another embodiment of the present invention, the step may be not included, and the advertisement server initiatively sends the advertisement to the advertisement client.

Step 504: The advertisement server sends the advertisement to the advertisement client. In the embodiment, the sent advertisement carries the advertisement identification, the advertisement content and the advertisement metrics policy, etc., and may also include an advertisement server address or other related information. The advertisement metrics policy and the advertisement content may also be sent separately.

Step 506: The advertisement client receives the advertisement and stores the metrics policy in the advertisement information. In the embodiment, a complete metrics policy includes the advertisement identification and at least one rule; the policy is stored after whether the policy exists in the client is judged; and if the policy exists in the client, the policy is not stored again.

Step 508: The service client requests the advertisement client to transmit the advertisement. Another embodiment of the present invention may not include the step.

Step 510: The advertisement client transmits the advertisement to the service client. In the present embodiment, the advertisement client sends the advertisement to the service client at proper time which may be preset, and the transmitted advertisement includes the advertisement identification, the advertisement content, etc.

Step 512: The service client presents the advertisement to the user. In the present embodiment, after the user performs interactions (for example, browsing, clicking, etc.) on the advertisement, the user advertisement interactions are recorded, including the information such as the advertisement identification, the interaction type, the starting time, the ending time, etc.

Step 514: The service client transmits the user interactions with advertisement to the advertisement client.

Step 516: The advertisement client stores the user interactions with advertisement reported by the service client, judges whether each of the records satisfies the validity condition according to the advertisement metrics policy after being triggered, and marks the user interactions with advertisement according to the judgment result.

Step 518: The advertisement client is triggered to start measuring and reporting, and reports the marked user advertisement interaction record information to the advertisement server according to the requirement of the advertisement server, including the information such as the user identification, the advertisement identification, the interaction type, the starting time, the ending time, validity or invalidity, etc.

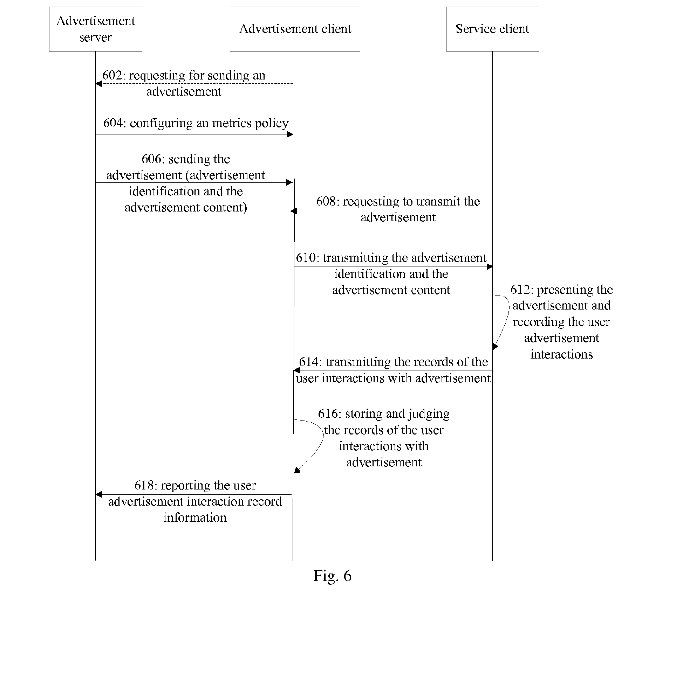

Referring to Fig. 6, an advertisement measuring and reporting method of an embodiment of the present invention includes the following steps:

Step 602: The advertisement client sends a message, adapted to request for sending an advertisement, to the advertisement server. In another embodiment of the present invention, the step may not be included, and the advertisement server initiatively sends the advertisement to the advertisement client.

Step 604: The advertisement server sends the advertisement metrics policy to the advertisement client. In other embodiments of the present invention, the step 604 may be performed first and then the step 602 is performed.

Step 606: The advertisement server sends the advertisement to the advertisement client. In the present embodiment, the sent advertisement includes the advertisement identification and the advertisement content, and may not include the advertisement metrics policy.

Step 608: The service client requests the advertisement client to transmit the advertisement. Another embodiment of the present invention may not include this step.

Step 610: The advertisement client transmits the advertisement to the service client. In the present embodiment, the advertisement client sends the advertisement to the service client at proper time which may be preset, and the transmitted advertisement includes the advertisement identification, the advertisement content, etc.

Step 612: The service client presents the advertisement to the user. In the present embodiment, after the user performs interactions (for example, browsing, clicking, etc.) on the advertisement, the user advertisement interactions are recorded, including the information such as the advertisement identification, the interaction type, the starting time, the ending time, etc.

Step 614: The service client transmits the user interactions with advertisement to the advertisement client.

Step 616: The advertisement client stores the user interactions with advertisement reported by the service client, judges whether each of the records satisfies the validity condition according to the advertisement metrics policy after being triggered, and marks the user interactions with advertisement according to the judgment result.

Step 618: The advertisement client is triggered to start measuring and reporting, and reports the marked user advertisement interaction record information to the advertisement server according to the requirement of the advertisement server, including the information such as the user identification, the advertisement identification, the interaction type, the starting time, the ending time, validity or invalidity, etc.

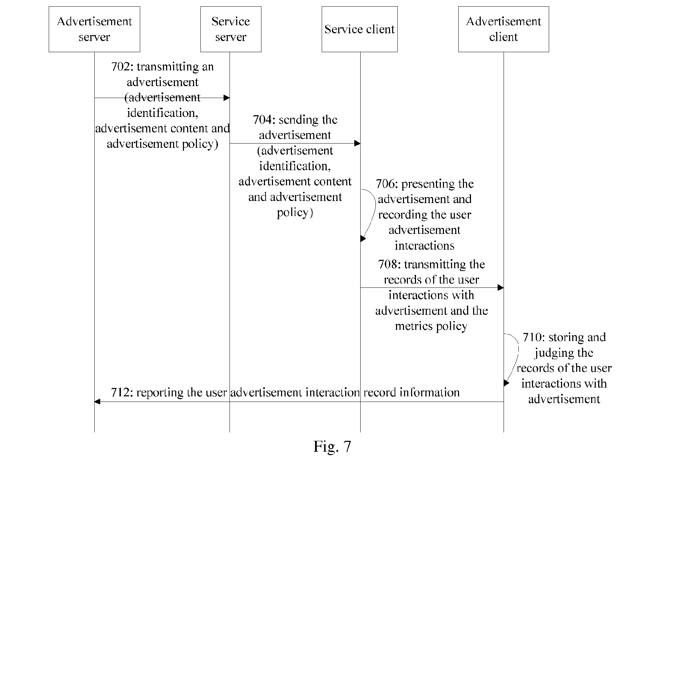

Referring to Fig. 7, an advertisement measuring and reporting method of an embodiment of the present invention includes the following steps:

Step 702: The advertisement server transmits an advertisement to the advertisement client. In the present embodiment, the sent advertisement carries an advertisement identification, an advertisement content, an advertisement metrics policy, etc., and may also include an advertisement server address or other related information. The advertisement metrics policy and the advertisement content may also be sent separately.

Step 704: The service server sends the advertisement to the service client. In the embodiment, the sent advertisement carries the advertisement identification, the advertisement content and the advertisement metrics policy, etc., and may also include the advertisement server address or other related information. The advertisement metrics policy and the advertisement content may also be sent separately.

Step 706: The service client presents the advertisement to the user. In the present embodiment, after the user performs interactions (for example, browsing, clicking, etc.) on the advertisement, the user advertisement interactions are recorded, including the information such as the advertisement identification, the interaction type, the starting time, the ending time, etc.

Step 708: The service client transmits the user interactions with advertisement to the advertisement client and simultaneously sends the metrics policy in the advertisement information together to the advertisement client. In other embodiments of the present invention, the service client may first send the advertisement metrics policy to the advertisement client and then perform the step 706. In this case, the advertisement metrics policy may not be included in the step 708.

Step 710: The advertisement client stores the user interactions with advertisement reported by the service client, judges whether each of the records is valid according to the advertisement metrics policy after being triggered, and marks the user interactions with advertisement according to the judgment results.

Step 712: The advertisement client is triggered to start measuring and reporting, and reports the marked user advertisement interaction record information to the advertisement server according to the requirement of the advertisement server, including the information such as the user identification, the advertisement identification, the interaction type, the starting time, the ending time, validity or invalidity, etc.

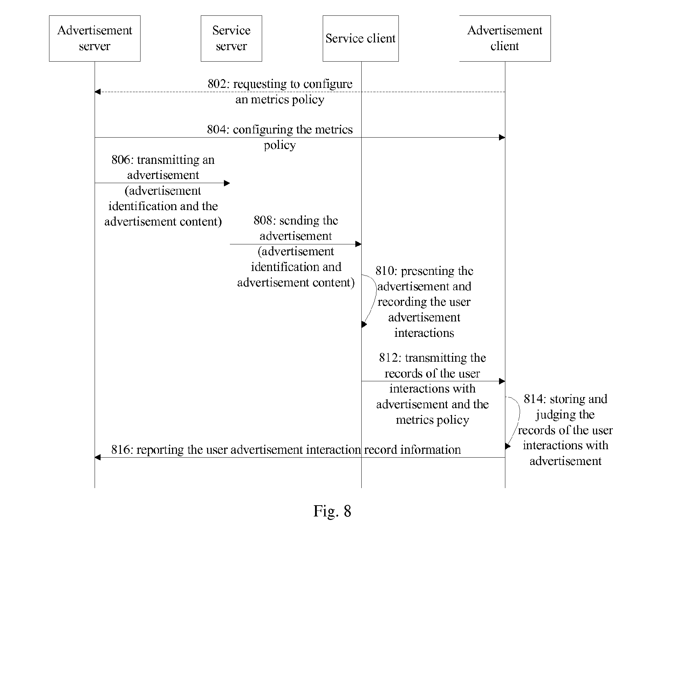

Referring to Fig. 8, an advertisement measuring and reporting method of an embodiment of the present invention includes the following steps:

Step 802: The advertisement client sends a request, for sending an advertisement metrics policy, to the advertisement server. In another embodiment of the present invention, the step may not be included, and the advertisement server initiatively sends an advertisement to the advertisement client.

Step 804: The advertisement server sends the advertisement metrics policy to the advertisement client. In other embodiments of the present invention, the step 804 may be first performed and then the step 802 is performed, which is not described any more.

Step 806: The advertisement server transmits an advertisement to the service server. In the present embodiment, the sent advertisement carries the advertisement identification, the advertisement content, etc., may not include the advertisement metrics policy, and may also include the advertisement server address or other related information.

Step 808: The service server sends the advertisement to the service client. In the present embodiment, the sent advertisement carries the advertisement identification, the advertisement content, etc., may not include the advertisement metrics policy, and may also include the advertisement server address or other related information.

Step 810: The service client presents the advertisement to the user. In the present embodiment, after the user performs interactions (for example, browsing, clicking, etc.) on the advertisement, the user advertisement interactions are recorded, including the information such as the advertisement identification, the interaction type, the starting time, the ending time, etc.

Step 812: The service client transmits the user interactions with advertisement to the advertisement client.

Step 814: The advertisement client stores the user interactions with advertisement reported by the service client, judges whether each of the records is valid according to the advertisement metrics policy after being triggered, and marks the user interactions with advertisement according to the judgment result.

Step 816: The advertisement client is triggered to start measuring and reporting, and reports the marked user advertisement interaction record information to the advertisement server according to the requirement of the advertisement server, including the information such as the user identification, the advertisement identification, the interaction type, the starting time, the ending time, validity or invalidity, etc.

Furthermore, an advertisement measuring and reporting method of another specific embodiment of the present invention includes the following steps:

The advertisement server sends a click-to-call advertisement provided with an identification 0005 to the advertisement client, and sends the advertisement metrics policy. The call duration is no shorter than 9s, and the call occurs at most twice within 5 minutes;

The advertisement client stores the advertisement, and the advertisement metrics policy is stored in the advertisement metrics policy storage unit. The advertisement client sends the advertisement to the service client at proper time;

The service client presents the advertisement to the user, and the user clicks the advertisement to call after seeing an interesting advertisement. The service client records the user interaction on the advertisement, and reports the record to the advertisement client in a real-time manner. The reported information includes:

| Advertisement Identification | Interaction Type | Starting Time | Ending Time | ... |
|---|---|---|---|---|
| 0005 | Call | 05.04, 10:30:01 | 05.04, 10:31:01 | ... |

After the collection unit of the advertisement client receives the user advertisement interaction record information, the collection unit stores the information in the user interaction record unit. As the record is not subject to the validity judgment process, the information is stored as follows:

| Serial Number | Advertisement Identification | Interaction Type | Starting Time | Ending Time | ... | Validity or Invalidity |
|---|---|---|---|---|---|---|
| 013 | 0005 | Call | 05.04, 10:30:01 | 05.04, 10:31:01 | ... | Null |

The processing unit of the advertisement client is triggered by a timer to start the validity judgment of the advertisement interaction record information. The processing unit first obtains a user advertisement interaction record `013' which is not subject to the judgment process from the user interaction record unit, and then obtains the metrics policy corresponding to the advertisement according to an advertisement identification `0005' in the record. The call duration is no shorter than 9s, and the call occurs at most twice within 5 minutes.

The processing unit judges whether the call duration reaches 9s according to the starting time and the ending time in the record, and, if the first condition is satisfied, the processing unit judges whether the second condition is satisfied by performing the following steps: searching the user interaction record unit for the record with the advertisement identification '0005' and the ending time earlier than '05.04, 10:36:01', and counting the searched records; if the statistical number is 2, judging that the record with the serial number '013' does not satisfy the second condition, that is, the record is invalid or false. The processing unit returns the processing result to the user interaction record unit.

The user interaction record unit receives the processing result and then modifies the recorded information as:

| Serial Number | Advertisement Identification | Interaction Type | Starting Time | Ending Time | ... | Validity or Invalidity |
|---|---|---|---|---|---|---|
| 013 | 0005 | Call | 05.04, 10:30:01 | 05.04, 10:31:01 | ... | Invalidity |

The advertisement server requests to obtain the valid user advertisement interaction record information from the advertisement client, and therefore, the reporting unit of the advertisement client requests to obtain the valid user advertisement interaction record information from the user interaction record unit and then reports the information to the advertisement server.

By reading the application, those of ordinary skill in the art may know that part or all of the steps in the method may be achieved by related hardware which is commanded by a program, and the program may be stored in computer-readable storage media, such as an RAM, an ROM, a CD, or the like.

The embodiment of the present invention is with the purpose of counting and reporting user advertisement interactions by processing the user interactions with advertisement through a terminal according to the advertisement metrics policy and reporting the processed user interactions with advertisement, which benefits to counting the user advertisement interactions, facilitates the measurement of the advertisement launch effect, saves the network resources, effectively improves the effective utilization of the network, is convenient for launching and counting ads, and is favorable for development of the advertising service. The metrics policy storage unit stores the advertisement metrics policy so that the advertisement metrics policy may be stored on the advertisement client without obtaining the advertisement metrics policy from the advertisement server. Different judgment conditions are set so that the advertisement measurement becomes more accurate, which satisfies the requirement for advertisement counting, facilitates effective counting of the advertising service, and facilitates feedback of the advertisement effects.

To sum up, the description is only directed to the preferred embodiments of the present invention and does not limit the protection range of the present invention. Any modification, equivalent replacement and improvement made within the range of the spirit and rule of the present invention may be incorporated in the protection range of the present invention.

## Claims

1. An advertisement measuring and reporting system, comprising:
an advertisement client, adapted to communicate with an advertisement server about advertisement, wherein the advertisement client is adapted to obtain user interactions with advertisement, process the user interactions with advertisement according to an advertisement metrics policy, and report the processed user interactions with advertisement to the advertisement server, and
an advertisement server, adapted to collect the processed user interactions with advertisement.

2. The measuring system of claim 1, the system further comprising:
a service client, adapted to communicate with a service server about advertisement, wherein the service server is adapted to obtain advertisement information from the advertisement server and send the advertisement information to the service client, and the service client is adapted to present an advertisement to a user and transmit the user interactions with advertisement to the advertisement client.

3. A terminal, comprising:
an advertisement client, adapted to communicate with a service client about advertisement; wherein the advertisement client is adapted to obtain user interactions with advertisement, process the user interactions with advertisement according to an advertisement metrics policy, and report the processed user interactions with advertisement, and the service client is adapted to present an advertisement to a user and transmit the user interactions with advertisement to the advertisement client.

4. The terminal of claim 3, wherein the advertisement client is further adapted to store the advertisement metrics policy.

5. An advertisement client, comprising:
an interaction record unit, adapted to obtain user interactions with advertisement;
a processing unit, adapted to process the user interactions with advertisement according to an advertisement metrics policy; and
a reporting unit, adapted to report the processed user interactions with advertisement.

6. The client of claim 5, wherein the advertisement client further comprises:
a collection unit, adapted to collect the user interactions with advertisement and store the user interactions with advertisement in the interaction record unit.

7. The client of claim 5, wherein the advertisement client further comprises:
a metrics policy storage unit, adapted to store the advertisement metrics policy.

8. An advertisement server, comprising:
a metrics policy management unit, adapted to provide an advertisement metrics policy, and
a metrics collection unit, adapted to collect user interactions with advertisement which is processed by the advertisement client according to the advertisement metrics policy.

9. The server of claim 8, wherein the advertisement server further comprises:
a metrics information storage unit, adapted to store the collected and processed user interactions with advertisement.

10. An advertisement measuring and reporting method, comprising:
obtaining user interactions with advertisement;
processing the user interactions with advertisement according to an advertisement metrics policy; and
reporting the processed user interactions with advertisement.

11. The method of claim 10, wherein the processing the user interactions with advertisement according to the advertisement metrics policy comprises: marking whether the user interactions with advertisement are valid according to a processing result.

12. The method of claim 11, wherein the reporting the processed user interactions with advertisement comprises: reporting only the user interactions with advertisement marked valid, or reporting all of the user interactions with advertisement and validity marks.

13. The method of claim 11, wherein the method further comprises: discarding invalid or false user interactions with advertisement before reporting the processed user interactions with advertisement.

14. The method of claim 11, wherein the reporting the processed user interactions with advertisement further comprises: integrating a plurality of the user interactions with advertisement into one integrated report and reporting the integrated report.

15. The method of claim 10, wherein the method further comprises: receiving the advertisement metrics policy sent by an advertisement server.

16. The method of claim 15, wherein the method further comprises: storing the advertisement metrics policy in an advertisement client.

17. The method of claim 10, wherein the advertisement metrics policy is a policy set by a terminal.

18. The method of 10, wherein the advertisement metrics policy comprises at least one of: the number of interactions performed by the same user on the same advertisement in a unit time, the total number of interactions performed by the same user on the same advertisement, the total number of interactions performed by the same user on all advertisement in the unit time, and duration of an interaction performed by the same user on the advertisement.

19. The method of claim 10, wherein the obtaining the user interactions with advertisement is triggered by a timer or an external event.

20. The method of claim 10, wherein the advertisement metrics policy comprises at least one of: a User Rule, an advertisement Category Rule and an advertisement Object Rule.

21. The method of claim 20, wherein the advertisement metrics policy is configured on the basis of an open mobile alliance device management (OMA DM) protocol.

22. The method of claim 20, wherein the User Rule, the Category Rule or the Object Rule further comprises a judgment condition and a judgment result;
the category of the judgment condition comprises at least one of: browsing, interacting, clicking, downloading and calling; and
the judgment result comprises at least one of: invalidation of a single user advertisement interaction record, one-off validation of a plurality of the user interactions with advertisement, and invalidation of all of the user interactions with advertisement.

23. The method of claim 22, wherein the final judgment result comprises a union set of the judgment results according to the User Rule, the Category Rule and the Object Rule.

24. The method of claim 10, wherein the method further comprises:
receiving a request message of the advertisement server for requesting to collect the user interactions with advertisement before reporting the processed user interactions with advertisement.

25. An advertisement interaction record collection method, comprising:
requesting advertisement interaction records from an advertisement client; and
collecting user interactions with advertisement which are processed by the advertisement client according to an advertisement metrics policy.

26. The method of 25, wherein the method further comprises:
sending the advertisement metrics policy to the advertisement client.
